## Europäisches Patentamt
## European Patent Office
## Office européen des brevets

(19)

(11) Publication number: **0 016 199**
**B1**

(12)    # EUROPEAN PATENT SPECIFICATION

(45) Date of publication of patent specification: **27.07.83**

(51) Int. Cl.³: **G 03 B 27/62**

(21) Application number: **79901024.4**

(22) Date of filing: **03.08.79**

(86) International application number:
**PCT/US79/00566**

(87) International publication number:
**WO 80/00379 06.03.80 Gazette 80/5**

(54) **APPARATUS FOR POSITIONING A PHOTOGRAPHIC IMAGE.**

(30) Priority: **07.08.78 US 931350**
**07.08.78 US 931351**

(43) Date of publication of application:
**01.10.80 Bulletin 80/20**

(45) Publication of the grant of the patent:
**27.07.83 Bulletin 83/30**

(84) Designated Contracting States:
**CH DE FR GB**

(56) References cited:
**US - A - 634 025**
**US - A - 1 397 237**
**US - A - 1 794 279**
**US - A - 2 443 281**
**US - A - 2 494 495**
**US - A - 2 726 060**
**US - A - 2 911 884**
**US - A - 2 933 030**
**US - A - 3 073 214**
**US - A - 3 094 036**
**US - A - 3 292 485**

(73) Proprietor: **EASTMAN KODAK COMPANY**
**Patent Department 343 State Street**
**Rochester, New York 14650 (US)**

(72) Inventor: **CLIFTON, Jerry L.**
**118 Sherri Ann Drive**
**Rochester, NY 14626 (US)**
Inventor: **GENTILE, Ralph**
**26 Minocqua Dive**
**Rochester, NY 14617 (US)**
Inventor: **HURLBUT, Russell G.**
**1116 Walker-Lake Ontario Road**
**Hilton, NY 14468 (US)**
Inventor: **KING, James L.**
**1062 Flynn Road**
**Rochester, NY 14612 (US)**
Inventor: **MODNEY, William**
**8 Jackie Circle East**
**Rochester, NY 14612 (US)**
Inventor: **ROSENBURGH, Norman J.**
**133 Rye Road**
**Rochester, NY 14626 (US)**
Inventor: **BLACKMAN, Robert J.**
**2428 Saint Paul Boulevard**
**Rochester, NY 14617 (US)**

Courier Press, Leamington Spa, England.

**0016199**

(56) References cited:
US - A - 3 418 042
US - A - 3 741 567
US - A - 4 027 968
US - A - 4 056 321

RESEARCH DISCLOSURE, no. 172, August 1978 New York US Eastman Kodak, ref.: 17280, 17289, 17288 "Film unit dispenser", "Rotational positioning device", "Device for picking up film units", pages 31—33.

(74) Representative: **Pepper, John Herbert et al, KODAK LIMITED Patent Department P.O. Box 114 190 High Holborn London WC1V 7EA (GB)**

## Apparatus for positioning a photographic image

This invention relates to apparatus for positioning a photographic image at a required position at a work station, for example in a photographic printer.

Proposals have been made for photographic film units for receiving a plurality of images disposed in an annular region of a piece of film, usually of disc shape. Such film units are rotated about the geometric axis of the annular region for receiving the images.

United States Patent Specification No. 1,794,279 discloses apparatus for positioning a photographic image at a required position at a work station (the objective of a printer). The image is one of a plurality carried by the film unit. The images are disposed in an annular region of the film unit. Rotary means are provided for rotating the film unit at the work station to bring the images in succession to the required position.

Photographic printing in these times has to be of high quality and has to be performed as a high volume operation in order to be commercially successful. The high quality is achievable, in part, by viewing and classifying the negative images and by including in the printing step compensation for deficiencies or irregularities of the negative image. In order to increase productivity such viewing and classifying should be conducted at a station other than that at which printing occurs. Thus, there are advantages in having at least two work stations. The prior art has no teaching which would enable the achievement of such advantages.

The present invention overcomes these disadvantages in apparatus for positioning a photographic image at a required position at a work station, the image being one of a plurality carried by a film unit in which the images are disposed in an annular region. The apparatus includes rotary means for rotating the film unit at the work station to bring the images in succession to the required position. The invention provides in such apparatus that there are a plurality of work stations of which the said work station is one, and that means are provided for moving the film unit to the work stations in sequence.

The rotary means may be arranged to move with the means for moving the film unit to the work stations in sequence. Such an arrangement has the advantage that it is not necessary to transfer the film unit to the influence of the rotary means when the film unit has been brought to the station at which the rotary means is located.

Alternatively the rotary means may be permanently located at the work station at which rotation is desired. This has the advantage of reducing the number of rotary means provided and hence results in economy. Moreover, the permanent mounting of the rotary means at the work station provides increased ability to meet positional tolerances required in relation to the film unit.

The means for moving the film unit to the work stations in sequence advantageously includes a positioner having a plurality of film unit carriers. Each of the carriers is adapted to carry a single film unit. The carriers are fixedly located relative to one another and are movable in unison to move the film units carried thereby to the work stations in sequence. Such an arrangement provides simplicity of structure and operation. Further advantages are achieved if the positioner is mounted for rotary motion.

Each carrier may be provided with freedom for limited translational movement relative to the remainder of the moving means whereby inaccuracy of positioning of the film unit at a station may be overcome. Such freedom for movement removes the need for very high degree of accuracy of construction and maintenance because it allows a carrier to move into perfect position after the moving means has been moved to a nominally correct position.

Embodiments of the present invention will be described by way of example, with reference to the accompanying drawings, in which:

Fig. 1 represents a perspective view of a known photographic printer modified by the inclusion of a first embodiment of the present invention;

Fig. 2 is a perspective view of the first embodiment of the invention with parts broken away, or exploded or omitted, for the sake of clarity of illustration;

Fig. 3 is a plan view of a portion of the apparatus illustrated in Fig. 2, being a mechanism for rotating a film unit;

Fig. 4 is a perspective view of another portion of the apparatus illustrated in Fig. 2, being pneumatic drive apparatus;

Fig. 5 is a schematic representation of a plan view of a simple form of apparatus in accordance with the present invention;

Fig. 6 is a view similar to Fig. 1 but with the printer modified by the inclusion of a second embodiment of the present invention;

Fig. 7 is a view similar to Fig. 2 but representing the second embodiment of the invention;

Fig. 8 is a cross-sectional view of a picker included in the apparatus illustrated in Fig. 7;

Fig. 9 is a view partially in cross section of a portion of the picker illustrated in Fig. 8, and of an end portion of a locating member;

Fig. 10 is a plan view, with parts broken away for the sake of illustration, of the locating member illustrated in Fig. 9, with parts omitted in Fig. 9 included;

Fig. 11 is a perspective view, with parts broken away and others omitted for the sake of clarity of illustration, of a mechanism for rotating a film unit, included in the apparatus illustrated in Fig. 8;

Fig. 12 is a view somewhat similar to that of Figs. 2 and 7, of a third embodiment of the present invention for inclusion in a printer such as that illustrated in Figs. 1 and 6, with parts broken away or omitted for the sake of clarity of illustration;

Fig. 13 is a cross-sectional view of a film unit carrier included in the positioning apparatus illustrated in Fig. 12;

Fig. 14 is a plan view of the carrier illustrated in Fig. 13;

Fig. 15 is a view similar to that of Fig. 13 but with the carrier in a different operational condition; and

Fig. 16 is a view similar to that of Fig. 14 but with the carrier in the operational condition illustrated in Fig. 15.

Because photographic printers in general are well known, as are other types of copiers, the present description will be directed in particular to elements forming part of, or cooperating more directly with, apparatus in accordance with the present invention. Elements not specifically shown or described may take various forms including those well known to those skilled in the art.

Image frames on a photographic unit may be utilized in numerous ways without affecting the structure of the photographic unit. For example, in the case of microfilm images, the image is typically in the form of a reduced document. This document image may, for example, be illuminated and projected upon a screen for viewing. Alternatively the image may be illuminated and projected upon a copy plane in which copy material is exposed for making duplicate copies. In other applications, an image frame may be scanned by a flying spot scanner to sense density variations. Electrical impulses corresponding to these variations may be processed through conventional electronic circuits and drive a display device, such as a cathode ray tube, for recreating the image represented on the frame. Positioning apparatus in accordance with the invention may be used to position a film unit, and individual images on the unit, for these various purposes.

The disclosed embodiments primarily concern the positioning of a film unit in and adjacent to the printer gate aperture of a photographic printer. A film unit used in this manner is typically a photographic negative transparency, although a positive transparency or a reflection print can be considered to be equivalent to negatives for purposes of the disclosed embodiments. In the case of a reflection print the illumination system would be different from that designed for transparencies, but these changes are within the capability of those skilled in the art.

The disclosed embodiments are described in relation to a disc-shaped film unit 1 (see Fig. 2) having a plurality of images 2. The film unit 1 includes a hub member 3 and a disc-shaped film disc 4 carried by the hub 3. The hub includes a spindle aperture 5 for receiving a spindle shaft (which will be described). The aperture 5 has a keyway 6. A pair of locating apertures 7 are formed in the hub 3. The images 2 are disposed on the film disc 4 in an annulus about the hub 3.

The disclosed embodiments are particularly useful where various activities occur relative to the film unit while it is supported by the positioner. These activities may include such functions as loading the film unit upon the positioner, classifying each image frame for density and/or color correction, removing dust from the film unit, printing individual frames from the unit and unloading the film unit from the positioner. However, some of these functions, such as loading and classifying, may occur in one location.

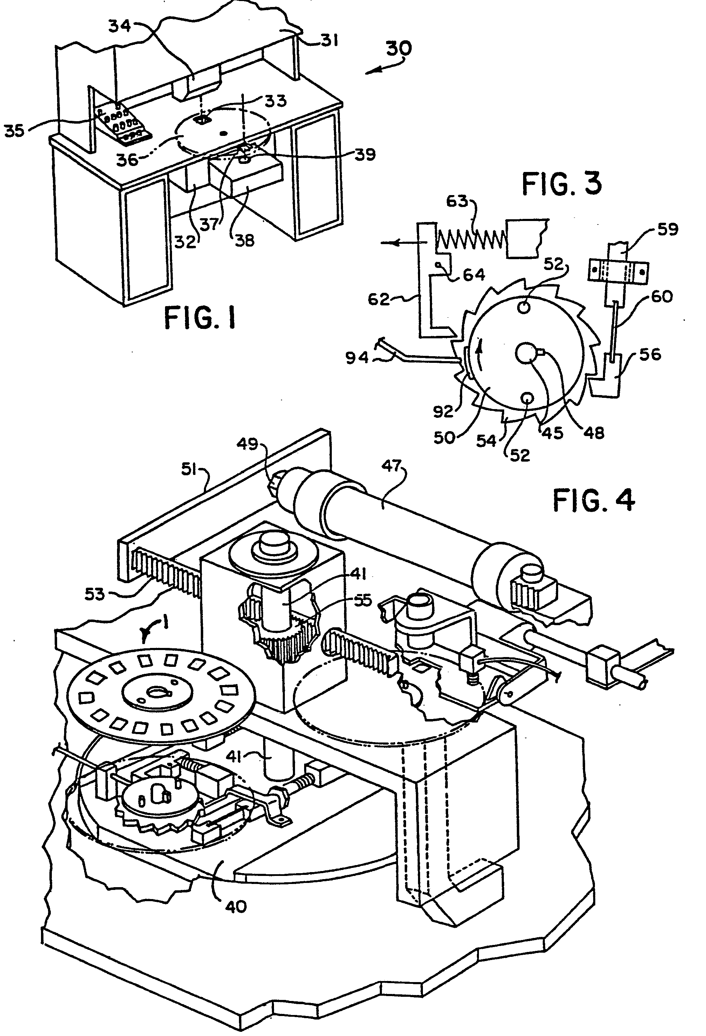

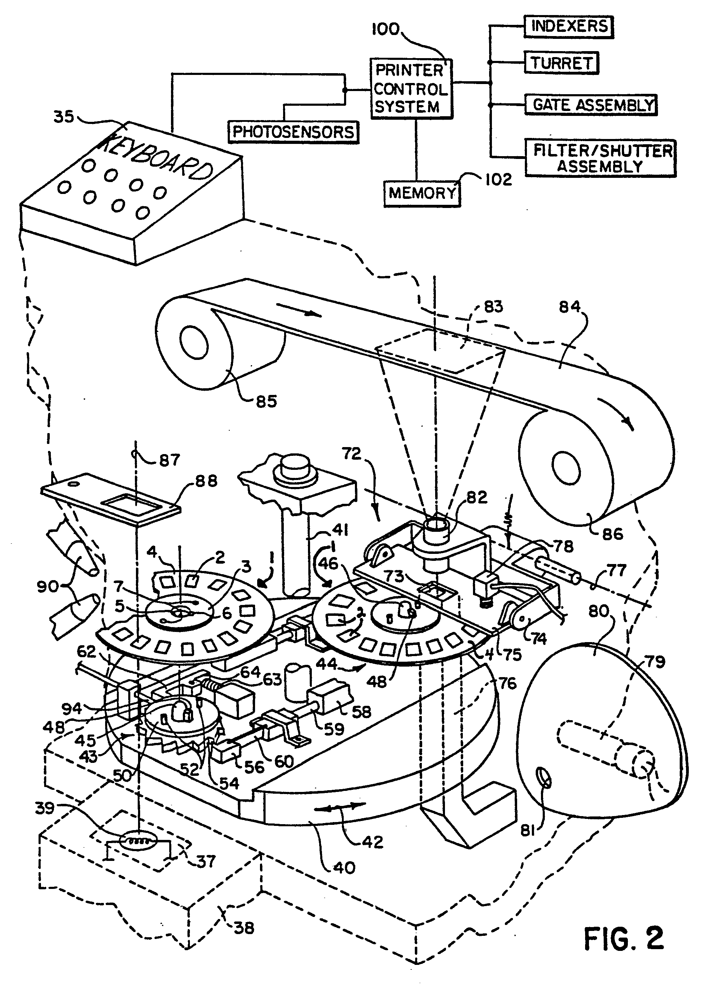

Referring now to Fig. 1, there is shown in phantom a view of film positioning apparatus in accordance with the present invention applied to a photographic color printer 30 such as a Kodak Model 5S-5 printer. The printer 30 is equipped with roll paper supply and take-up magazines and apparatus for advancing a roll of photosensitive photographic print material from the supply magazine through the exposure station of the photographic printer to the take-up magazine, all such components being enclosed in a light-tight cabinet 31. The color printer is also equipped with an exposure lamphouse 32 located beneath the table of the photographic printer and operative to project printing light through a negative positioned in a printing aperture 33 of the printer 30. The printing light beam directed through the photographic negative is projected by projection lens encased in a lens assembly housing 34 onto the photosensitive photographic print material located in the print exposure station within the light-tight cabinet 31.

Three subtractive primary color filters are located within the housing 34 and are operative, in conjunction with associated exposure control circuits, to control exposure of the photosensitive print material to light of the three respective primary colors passing through the negative. These color exposures are terminated after respective time periods dependent upon the intensities of such primary colors of light detected by three respective primary color measuring photosensors. A keyboard assembly 35 is provided with a number of subject classification and color correction buttons that the operator of the printer may depress to alter the exposure parameters to produce a commercially acceptable print from a negative that requires classification and correction. The construction and operation of the Kodak Model 5S-5 Printer is described in greater detail in the operation manual published by the Eastman Kodak Company (i.e., Publication 638239, "Operating the Kodak Color Printer Model 5S-5", June 1976).

The first embodiment of the film positioning apparatus is shown in phantom and identified by reference numeral 36 in Fig. 1. The film positioner 36 extends adjacent the printing aperture 33 and a classification aperture 37 which is illuminated from below by a classification lamphouse assembly 38 having a lamp 39 positioned adjacent the aperture 37.

Referring now to Fig. 2, the first embodiment of the invention includes a turret 40 mounted for rotation by a shaft 41 in the directions indicated by the arrow 42. The shaft 41 supports the turret 40 in relation to the printer work surface (shown in broken lines in Fig. 2) of the printer 30. The shaft 41 is coupled to drive apparatus, which may take the form shown in Fig. 4. More specifically, a pneumatic cylinder 47 includes a piston 49 attached to a drive block 51. One end of a rack gear 53 is also attached to the drive block 51. The rack gear 53 mates with a pinion gear 55 on the drive shaft 41. The drive apparatus moves the shaft 41 in successive half-revolution movements, the turret 40 being rotated 180° in one half-revolution movement and returned 180° in the next half-revolution movement. This reciprocating 180° movement simplifies electrical and pneumatic connections between moving and sensing parts of the turret 40 and associated stationary control mechanisms external of the turret. However continuous rotation of the turret 40 could be maintained if the requisite connections were set up accordingly, e.g., brush and commutator electrical connections.

Referring again to Fig. 2, a pair of substantially identical indexing mechanisms 43 and 44 are mounted on the turret 40 for rotation about respective spindle shafts 45 and 46. The components of the indexing mechanisms 43 and 44 are substantially identical, and it is to be understood that they function in a like manner. The layout of the indexing mechanism is additionally illustrated in the Fig. 3 detail. Each spindle shaft 45 and 46 includes a key 48. Each indexing mechanism includes a support plate 50 having locating pins 52 spaced from the respective spindle shaft 45 and 46. The support plate 50 is mounted for rotation on a ratchet gear 54. A pneumatically operated drive pawl 56 is provided for driving the ratchet gear. The pawl 56 is connected by flexible member 60 to the piston 59 of a pneumatic cylinder 58. Disposed opposite the drive pawl 56 is a detent 62, which is biased by a spring 63 to rotate (counterclockwise as seen in Fig. 3) about a pivot 64 and against adjacent gear teeth on the ratchet gear 54.

A negative gate assembly 72 is provided on the printer 30 for enclosing a printer gate aperture 73. The assembly 72 includes a yoke 74 and a pressure plate 75 for sandwiching the film disc 4 against the top surface of an integrating bar 76. The yoke 74 is pivoted about axis 77 by drive means (not shown) so that the pressure plate 75 may be raised and lowered to allow separate images 2 to be positioned at the aperture 73. An air inlet 78 is included in the pressure plate 75 to assist in cooling the film disc 4.

The optical system of the printer 30 includes a lamp 79 enclosed within an ellipsoidal reflector and backing mirror 80. Rays from the lamp 79 pass through an aperture 81 in the mirror 80 and, from there, are reflected and diffused by the integrating bar 76. The diffuse rays emerge at the printer gate aperture 73 and impinge on an image 2 positioned at the aperture. Image light emerging from the image 2 is focused by a lens 82 upon an image plane 83 disposed on the surface of photographic paper 84. The paper extends between a roll paper supply reel 85 and a take-up reel 86 enclosed within the light-tight cabinet 31 illustrated in Fig. 1.

The classification aperture 37 is located adjacent the classification lamphouse assembly 38 and defines a classification axis 87. Light from the lamp 39 illuminates a selected image 2 and the resultant image light is imaged on a frame viewer 88 from where it is visually observed. Operator judgements regarding negative classification are entered via the keyboard assembly 35 into an electronic control system 100 of the printer. In addition, the operator can enter the number of prints desired for each frame.

In operation, a film unit 1 is placed on the indexing mechanism 43 by the printer operator. The hub member 3 is so configured that the locating apertures 7 and the spindle aperture 5 mate with the locating pins 52 and the spindle shaft 45. The film unit 1 is initially aligned on the indexing mechanism 43 by additionally mating the keyway 6 with the key 48 formed on the spindle shaft 45. In this embodiment the film disc 4 is so positioned initially on the indexing mechanism 43 that an image 2 is disposed in the visual classification axis 87.

The operator examines the first image 2 by means of the frame viewer 88 and decides if color and/or density corrections are required. If needed, the operator depresses the appropriate buttons on the keyboard assembly 35. The classification data is thereupon entered into an electronic memory 102 to be stored until needed. Simultaneously, the pneumatic cylinder 58 is actuated and its piston 59 retracts the drive pawl 56. One of the teeth on the ratchet gear 54 is engaged by the pawl 56 and the indexing mechanism 43 is thereby stepped an angle corresponding to the angle between the centres of adjacent images 2. The pneumatic cylinder 58 then releases its piston 59 and the pawl 56 resumes its initial position. Meanwhile, the detent 62 has engaged one of the ratchet teeth to prevent rotation of the gear 54 with the pawl 56 during return movement of the pawl. The adjoining image 2 is now in posi-tion for examination by the operator. The operator classifies the image and punches the proper correction into the keyboard assembly 35. Then the sequence of operations described in connection with the first image 2 is repeated. In this manner, each of the images 2 on the film disc 4 is successively classified.

During the course of classification the correction for each image 2, and the image location on the film disc 4, is stored in the electronic memory 102. After all the images are classified, the shaft 41 is rotated 180°, by mechanism described above in connection with Fig. 4, so that the turret 40 likewise is turned by 180°. The rotation of the turret 40 interchanges the positions of the indexing mechanisms 43 and 44. Indexing mechanism 43 had previously been adjacent the classification aperture 37 and it is now adjacent the printer gate aperture 73. Similarly, the indexing mechanism 44 is moved from the printer gate aperture 73 to a position adjacent the classification aperture 37.

The film unit 1 mounted on the indexing mechanism 43 now is sandwiched between the pressure plate 75 and the output end of the integrating bar 76. Initially, the printer gate yoke 74 is raised away from the integrating bar 76 by rotation about the axis 77. This allows space between the pressure plate 75 and the integrating bar 76 such that the film disk 4 may slip between them as the turret 40 is rotated and the film unit 1 moves adjacent the printer gate aperture 73. Once the film unit 1 is in place, the control system 100 commands printing to start. The command initially disconnects the pneumatic cylinder 58 from operator control and connects it to the electronic control system. Then the classification for the first of the images 2 is retrieved from the memory 102 and inserted into the control system 100 for automatically controlling the length of printing exposure. The printer gate yoke 74 then rotates about the axis 77 so that the pressure plate 75 bears against the film disc 4 with the first of the images aligned in the printer gate aperture 73.

The dark shutter then opens, permitting the exposing beam to impinge on the photographic paper 84 along the image plane 83. Each color photosensor begins to measure its respective image color and, in accordance with operator classification for each color, signals the control system 100 to terminate exposure in that color when sufficient exposure is reached. The control system initiates insertion of the appropriate subtractive filter to terminate the complementary color exposure. When exposure terminates due to insertion of all the subtractive filters and the dark shutter into the printing beam, the pneumatic cylinder 58 is automatically enabled by the electronic control system 100 to begin stepping of the indexing mechanism 43 to the next position at which the next image 2 is positioned in the printer gate aperture 73. At the same time, the photographic paper 84 is advanced by a distance corresponding to one print by conventional mechanism (not shown). When the next of the images 2 is in the printer gate aperture 73, the exposure sequence repeats itself as before, the indexing mechanism 43 is again rotated, and so on. Automatic sequencing continues until the last of the images 2 on the film disc 4 is printed. Then the turret 40 is conditioned for rotation of 180°.

Meanwhile, the operator places another film unit on the indexing mechanism 44 and classifies each of the images on the film disc. The mechanical operation is the same as described before in connection with the indexing mechanism 43, except that the classification data punched into the keyboard assembly 35 may of course differ from that concerning the previous film unit. The presence of the last image on the film disc opposite the classification aperture 37 is recognized by the electronic control system 100 (for example, by a reflective patch 92 rotating into position adjacent a photosensor 94—see Fig. 3). After the operator enters classification data corresponding to the last image in the keyboard assembly 35, if the printing of the images 2 of the film disc 4 has been completed, the mainshaft 41, and with it the turret 40, is rotated by 180°. Indexing mechanism 43 is now returned to a position adjacent the classification aperture 37 and the complete sequence of operations recurs, the film unit 1 on the indexing mechanism 43 being replaced with another film unit while the film unit on the indexing mechanism 44 is being printed.

While the first embodiment is described and illustrated for use in positioning disk-shaped film units in the printer gate aperture of a photographic printer, it may have other applications. For example, the film unit 1 may contain microimages of documents and the image plane 83 may be located in the plane of a viewing screen rather than on a web of photographic paper. Alternatively, the image plane 83 could be in the plane of appropriate photosensitive material for making duplicate enlarged copies of the microfilm images. In this embodiment, the position of the indexing mechanism at the classification aperture serves to facilitate loading and unloading of the microfilm unit. Since color and/or density correction may be unnecessary in this application, the operator may have but to enter the number of copies into the keyboard assembly 35.

Other operations may be performed upon the film unit 1. For example, air from the nozzles 90 (see Fig. 2) may be used to clean the film disc 4 while associated images 2 are being classified by the operator. Although the first embodiment has two operative positions—classification and exposure—any reasonable number may be accommodated by such positioning apparatus. For example, two additional indexing mechanisms may be installed on the turret 40 and the shaft 41 conditioned to rotate 90° at each step, instead of 180°. The frame cleaning can then occur at a position midway between the present classification and exposure positions, while loading/unloading may also occur at a midway position, but on the opposite side of the turret 40.

As the turret 40 moves the film unit 1 into the printing gate aperture 73 (see Fig. 2), it is desirable to elevate the film disc 4 away from the integrating bar 76 to prevent scratching the surface of the film. Providing that the indexing mechanisms 43 and 45, and the film units associated therewith, are always brought back to an initial orientation or position before rotating the turret 40 to the next work position, the film unit 1 may be raised vertically away from the turret 40 in that one orientation a sufficient distance to clear the bar 76. This is accomplished by rotating the indexing mechanisms 43, 45 over a single stepped cam (not shown) disposed between the plate 50 and the turret surface. The cam step is positioned relative to the indexing mechanisms 43 and 45 so that the plate 50 advances up the step only at the initial orientation of the film unit; therefore the film unit 1 is brought adjacent the printing gate aperture 73 while spaced from the bar 76. The initial orientation is so chosen that no image is presented to the printing gate aperture 73. Advancing the film indexing mechanism further drops the plate 50, and the film unit therewith, off the cam step such that the first image 2 now lies in the aperture 73 adjacent the bar 76. Each subsequent image 2 then lies adjacent the bar 76. After printing the final image, the indexing mechanism advances upon the cam step again so that the positioner is disposed for movement to the next work station.

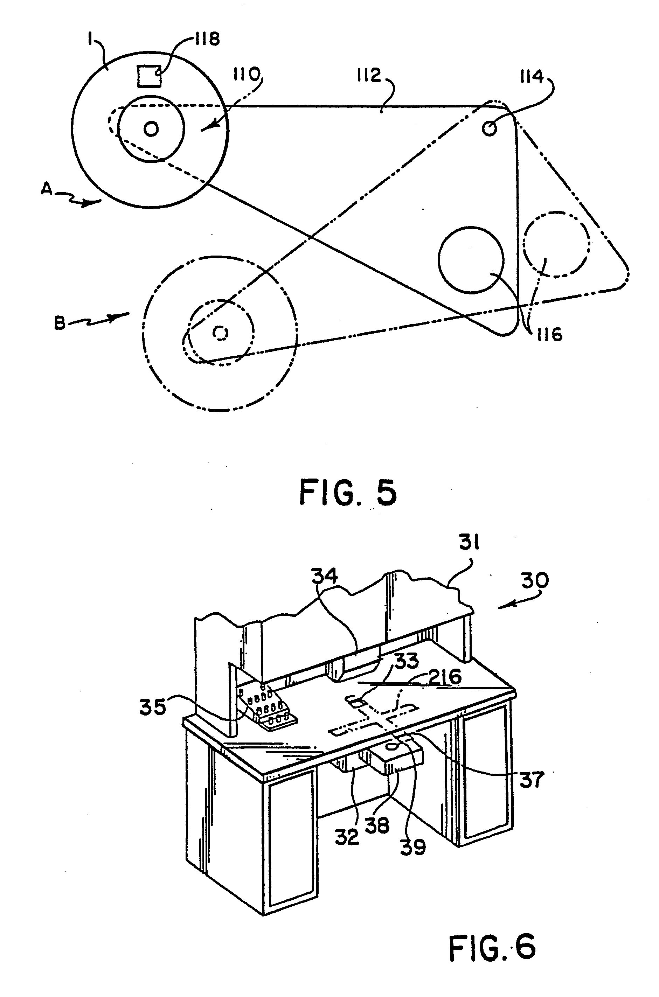

While the first embodiment has been described in relation to several film unit indexing mechanisms on a circular turret, it is to be understood that the invention is not limited to such an arrangement. For example, as illustrated by Fig. 5, a film positioner in accordance with the invention includes a single indexing mechanism 110—not illustrated in detail but understood to be a counterpart of the indexing mechanism 43 as described in connection with Fig. 2. The indexing mechanism 110 is mounted on a triangular positioner plate 112 that is adjacent the printing gate aperture 118 and mounted for rotation about a pivot 114. A knob 116 is mounted at one corner of the triangular plate 112. By using the knob 116 to pivot the plate 112, the positioner reciprocates between position A and position B (shown in phantom). In position A, a film unit 1 is positioned in the printing gate aperture 118 of the printer; position B is useful for loading and unloading of a film unit 1.

Referring now to Figure 6, there is shown in perspective a view of a film positioning apparatus, forming a second described embodiment of the present invention, detachably positioned upon a photographic color printer 30 which can for example take the form of a Kodak Model 5S-5 printer. Reference should be made to the description above of the printer illustrated in Fig. 1 for an understanding of the printer illustrated in Fig. 6.

The film positioning apparatus is shown in phantom and designated by reference numeral 216 in Fig. 6 The film positioner 216 is positioned adjacent the printing aperture 33 and the classification aperture 37 which is illuminated from below by a classification lamphouse assembly 38 having a lamp 39 positioned adjacent the aperture 37.

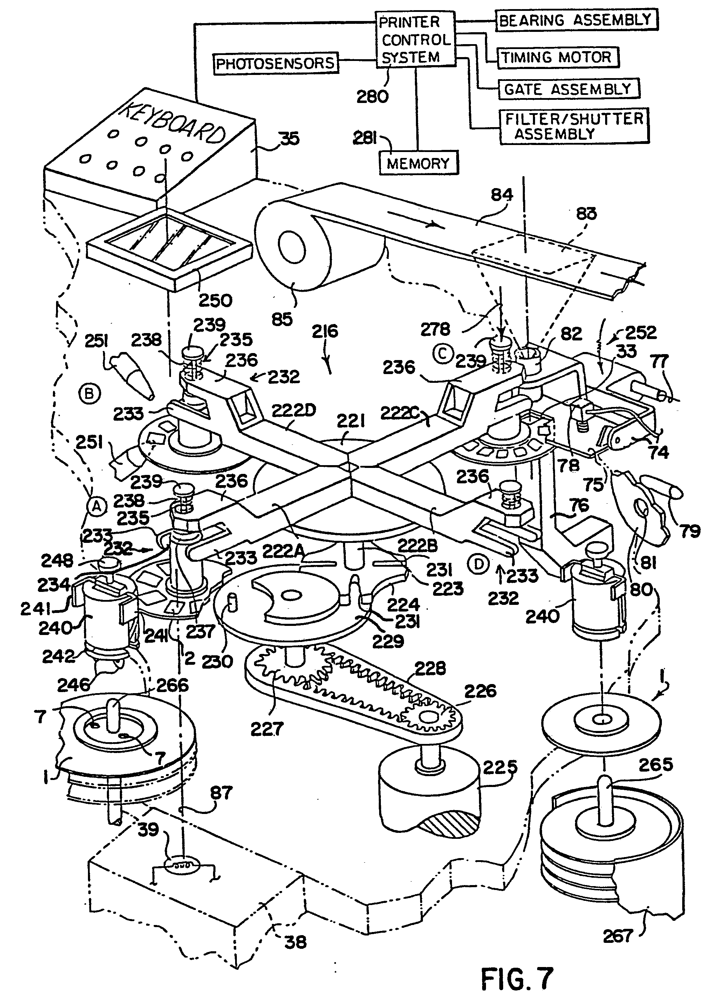

Referring now to Fig. 7, the film positioner 216 includes a mounting plate 221 and four arms 222A—222D extending outwardly from the plate 221. A main shaft 223 connects at one end to the center of the plate 221 and at its other end to a Geneva wheel 224. A motor 225 is connected by gears 226 and 227 and a belt 228 to a Geneva rotor 229. An actuating pin 230 protrudes from the Geneva rotor 229 to mate with slots 231 in the Geneva wheel 224 for moving the latter in steps. In this second embodiment, there are four slots 231 corresponding to the four arms 222A—222D.

A slotted locating member 232 is supported at the end of each arm 222A—222D. Since each member 232 is identical, the locating member positioned on arm 222A will be described in detail with the understanding that similar components are provided on the end of each other arm 222B—D. The member 232 includes two locating fingers 233 together bounding a slot 234 between them that extends radially inwardly toward the mounting plate 221. A spring loaded plunger 235 is mounted through an aperture in a support 236 that overlies the locating fingers 233. The plunger 235 terminates at its lower end in a magnetic plate 237 movably located between the support 236 and the locating fingers 233. The magnetic plate 237 is biased upwards against the underside of the support 236 by a spring 238 sandwiched between the topside of the support 236 and an actuating button 239 formed at the top end of the plunger 235.

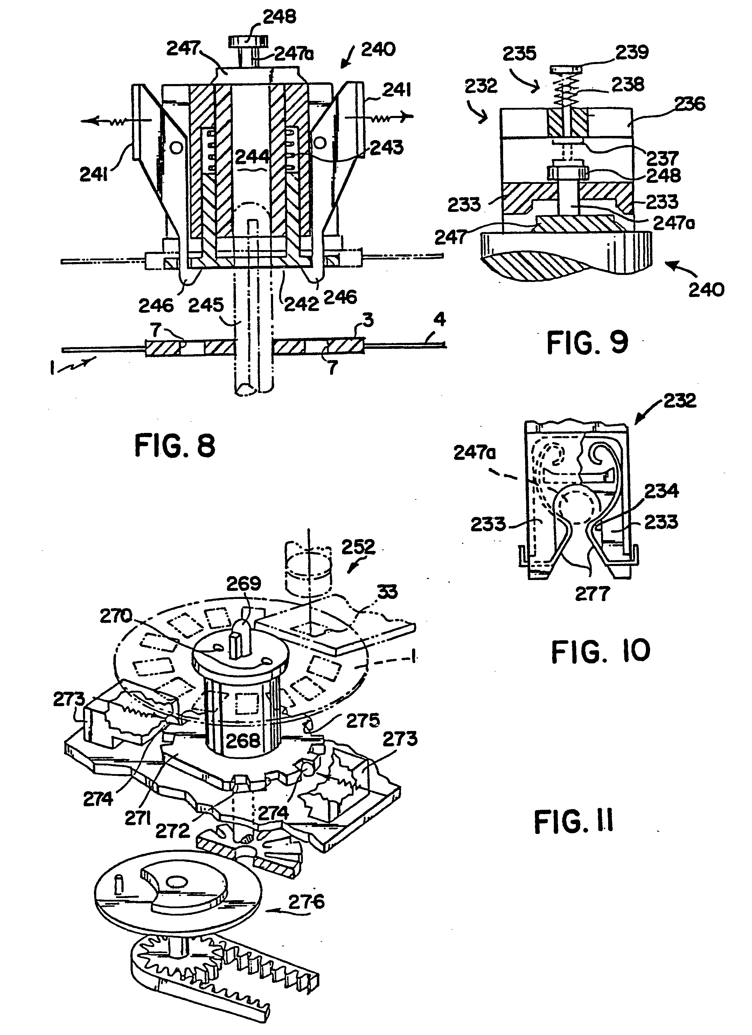

The slot 234 is intended to receive a picker 240 for holding a film unit 1. The picker 240 (as best seen in Fig. 8) includes a pair of hooked fingers 241 that are designed to engage the locating apertures 7 in the hub member 3 of the film unit 1. Each finger 241 is spring-biased so that its lower end snaps radially inward toward the center of a captured film unit 1. A plunger 242 is axially biased by a spring 243 to snugly fit against the tips 246 of the fingers 241. An aperture 244 in the center of the picker 240 is formed to receive a spindle 245 (shown in phantom) on which film units of the type described are stacked as shown in Fig. 8. Latching is accomplished by sliding the picker 240 onto the spindle 245 until the hooked fingers penetrate the locating apertures 7 of the top film unit, sandwiching the hub member 3 between the tips 246 of the fingers 241 and the plunger 242. The biasing force of spring 243 holds the hub member 3 captive against the fingers 241.

The slot 234 is formed in the locating member 232 so as to receive the picker 240 in one orientation only, and thus, the film unit in one orientation also. For this reason the slot 234 has edges designed to receive a key member 247 on the top of picker 240 for one-way insertion (see Fig. 10). The key member 247 has an upwardly extending small diameter neck 247a which supports a larger-diameter magnetic lug 248. The lug 248 and the magnetic plate 237 form complementary means for suspending the picker 240 from the support 236. The plate 237 may be brought into contact with the lug 248 by depressing the actuating button 239 and, when the button 239 is released, the spring 238 biases the magnetically retained picker 240 upwards against the locating fingers 233.

The film positioner 216 has a plurality of work positions corresponding in number to the number of work stations where activities are performed with respect to the film units. In Fig. 7 four such work stations are shown. Station A is the classification station 37 previously described in connection with Fig. 6. Station A is adjacent the classification lamphouse assembly 38 (shown in phantom form in Fig. 7 and spaced from the film unit 1 for ease of illustration) and a classification axis 249. Light from the lamp 39 illuminates a selected image 2 and the resultant image light is imaged on a frame viewer 250 where it is visually observed. Operator judgments regarding negative classification are entered via the keyboard assembly 35 into an electronic control system 280 of the printer. In addition, the operator can enter the number of prints desired for each frame. In response to the control system 280, subtractive filters in the lens assembly housing 34 are brought into the exposing beam of light to incrementally terminate exposure in each color.

Station B is spaced ninety degrees from station A and includes apparatus for cleaning dust from the film unit 1. A pair of opposing air nozzles 251 are so located that the positioner 216 moves the film unit frames between them. Depending on the necessity, ionized air may be supplied to the nozzles 251 to assist in removing dust from the film element 1.

Station C is spaced ninety degrees from the station B. At this station the film unit 1 is located adjacent the printing gate aperture 33. A negative gate assembly 252 is provided at station C for enclosing the printing gate aperture 33. The assembly 252 is substantially the same as that described above in relation to the first embodiment and reference should now be made to that description.

The optical system of the printer 30 is substantially the same as that described in relation to the first embodiment and reference should be made to that description.

A further station D is spaced ninety degrees from prior station C. Here the picker 240 with attached film unit 1 is removed from the positioner, depositing the film unit on a stacking spindle 265 for later removal in a container 267. The picker 240 is then reused in the apparatus to pick a new film unit from a loading spindle 266 and resume the sequence of operation, beginning again at station A.

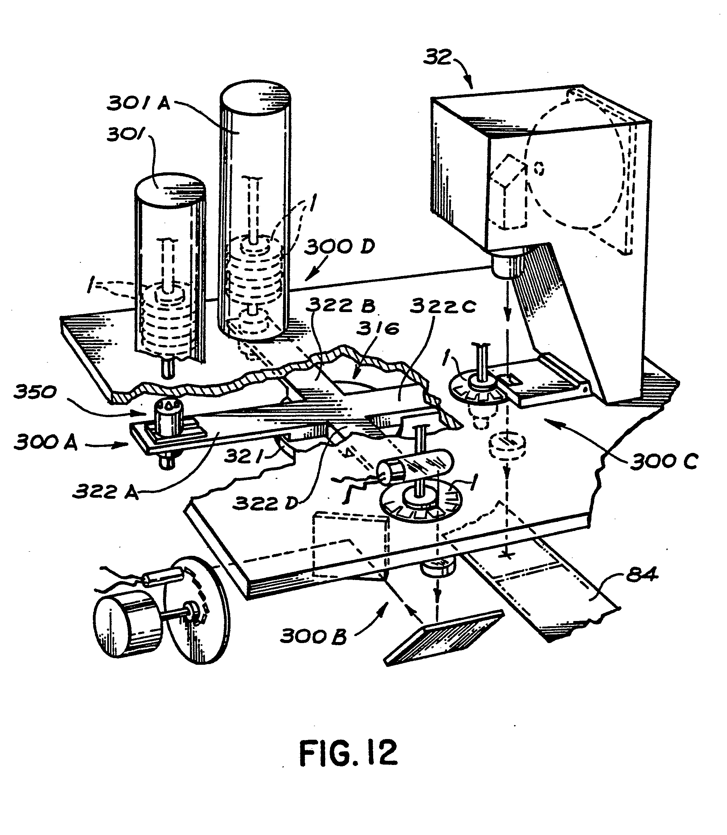

The picker 240 is loosely fastened to the positioner 216 by means of magnetic attraction between the magnetic plate 237 and the lug 248. This attraction seats the key member 247 on the picker 240 in the specially slotted edges of the fingers 233, thereby fixedly orienting the picker 240—and the film unit 1—with respect to the positioner. At any of the stations A—D, the picker 240—and the film unit that it holds—may be released from its seated position in relation to the locating member 232 by depressing the button 239 until the key member 247 unseats from the slot 234. It is desirable to rotate the film unit 1 by its hub member 3 in some of these positions, notably at station C adjacent the printing gate aperture 33. Fig. 11 illustrates one embodiment of indexer mechanism external to the positioner for rotating the film unit 1 and repeatedly and correctly positioning the images 2 relative to cooperative apparatus in the printer 30.

As shown in Figure 11, the cooperative apparatus at station C is the negative gate assembly 252, and more specifically the printing gate aperture 33. A rotatable bearing assembly 268 contains a spindle shaft 269 located adjacent the printer gate aperture 33. The spindle aperture 5 of the film unit 1, shown in phantom in Fig. 11, mates with the spindle shaft 269 on the bearing assembly 268. Further the tips 246 of the hooked fingers 241, which protrude through the locating apertures 7 of the hub member 3, mate with a pair of locater holes 270 formed in the assembly 268. The film unit 1 is therefore held captive between the picker 240 and the bearing assembly 268. A wheel 271, having a plurality of notches 272 corresponding to the number of images 2, is attached to the bearing assembly 268. A pair of diametrically opposed blocks 273 contain ball plungers 274 which engage an opposed pair of diametrically opposed notches 272 in the wheel 271 when the balls and notches are aligned. When the bearing assembly 268 is rotated, the balls 274 are depressed by one of a plurality of peripheral segments 275 on the wheel 271, permitting the assembly 268 to rotate relative freely until another pair of diametrically opposed notches 72 are engaged.

The film unit indexer mechanism, illustrated in Fig. 11, may be duplicated at those stations A—D where incremental rotation of a film unit is necessary to perform the function carried out at a particular station. For example, it may be desirable to rotate the film unit 1 when positioned in the classification position A. The motive means for causing the bearing assembly to rotate may be any suitable drive means, such as the Geneva drive mechanism 276 shown in Fig. 11. The operation of the Geneva drive 276 is essentially the same as the Geneva drive described in connection with Fig. 7, except that the number of slots in the Geneva wheel will now correspond to the number of images 2 on a film unit 1.

In operation, the sequence begins when the printing operator takes the picker 240 by its hooked fingers 241 and mates the aperture 244 with the loading spindle 266, sliding the picker 240 along the spindle 266 and pressing it down on the top film unit in the stack. As better shown in Fig. 8, when the picker 240 is gently pressed against the film unit, the tips 246 of the hooked fingers 241 penetrate the locating apertures 7 of the top film unit, separating slightly under bias to permit entry. Simultaneously, the plunger 242 retracts against bias by pressure against the surface of the hub member 3 and the hub member 3 becomes tightly wedged between the finger tips 246 and the plunger 242. The top film unit is then removed from the loading spindle 266 (which spindle is similar to spindle 45).

The picker 240, and its captured film unit 1, is then manually oriented until the key member 247 matches the slot 234 between the locating fingers 233 on the outboard end of film positioner arm 222A. The entire assembly is then slipped into the slot 234 until the small diameter neck 247a of the key 247 is captured between opposing leaf springs 277 mounted in each of the locating fingers 33 (see Fig. 10) (not shown in Fig. 9). In the disclosed embodiment the film disc 4 is so positioned initially on the locating member 232 that an image 2 is disposed in the visual classification axis 249.

Before classification proceeds, the picker 240 and its captured film unit 1 is conditioned for rotation by apparatus as illustrated in Fig. 11. The operation of this apparatus will be described in connection with the station C adjacent the printing gate aperture 33. Therefore, assuming for now that the picker 240 is capable of rotation, the operator examines the first image 2 by means of the frame viewer 250 and enters appropriate color and/or density correction by depressing the appropriate buttons on the keyboard assembly 35. The classification data is thereupon entered into an electronic memory 281 to be stored until needed. The picker 240 is next rotated and an adjoining image 2 is placed in the classification axis 249 for examination by the operator. The operator classifies this negative image and enters the proper correction into the keyboard assembly 35. Then the picker 240 is again rotated, a new image classified, and so on. In this manner, each of the images 2 on the film disc 4 is successively classified.

During the course of classification the correction for each image 2, and the image location on the film disc 4, is stored in the electronic memory 281. After all the images are classified, and presuming all functions occurring at the other positions are completed, the motor 225 is energized and moves the belt 228 so that the gear 227, and therewith the Geneva rotor 229, make one revolution. During this revolution, the actuating pin 230 engages one of the slots 231 in the Geneva wheel 229 during its forward travel. The wheel 229, and therewith the shaft 223, steps one quarter of a revolution, moving the film positioner 216 by ninety degrees, that is, one-quarter revolution. The partial revolution of the film positioner 216 advances each arm 222 to the next position. Where the picker 240 and the film unit 1 had previously been adjacent the classification station A, they are now adjacent the station B.

The film cleaning apparatus is located at station B. The pair of nozzles 251 blow air upon the film disc 4 from opposite sides. Rotation at this station is more optional since the compressed air will sweep around to the regions of the film disc 4 positioned away from the nozzles 251 may be provided in movable supports for found necessary or, alternatively, the nozzles 251 may be provided in movable suports for sweeping across the film disc 4. Following completion of cleaning, and of the other operations occurring at the other positions, the Geneva drive illustrated in Fig. 7 is again stepped a quarter revolution until the picker 240, and its captured film unit 1, are positioned adjacent the printing gate aperture 33.

The film disc 4 is initially sandwiched between the pressure plate 75 and the light output end of the integrating bar 76. The printer gate yoke 74 is raised away from the integrating bar 76 by rotation about the axis 77. This allows space between the pressure plate 75 and the integrating bar 76 such that the film disk 4 may slip between them as the positioner 216 is rotated and the film unit 1 moves adjacent the printer gate aperture 33. At station C, a machine element—indicated by arrow 278—engages the actuating button 239 and depresses the spring loaded plunger 235. Such a machine element 278 may be, for example, a solenoid-actuated piston. As illustrated by Fig. 9, the depressed plunger 235—shown in broken lines—forces the magnetic lug 248 downward, unseating the key member 247 from the slot 234. The picker 240 is now disengaged from its one-way position on the film positioner arm 222A and free for rotation by the external mechanism illustrated in Fig. 11.

While the top of the picker 240 is being unseated from the locating member 232, the bottom of the picker 240 is seating onto the rotatable bearing assembly 268. In particular, the protruding tips 246 of the hooked fingers 241 enter the locator holes 270 while the aperture 244 seats upon the spindle shaft 269. The rotational drive provided by Geneva drive mechanism 276 is now in control of the film unit 1.

With the picker 240 in place, the electronic control system 280 commands printing to start. The classification for the first of the images 2 is retrieved from the electronic memory 281 and inserted into the electronic control system 280 for automatically controlling the length of printing exposure. The printer gate yoke 74 then rotates about the axis 77 so that the pressure plate 75 bears against the film disc 4 with the first of the images aligned in the printer gate aperture 33.

A printing operation then occurs substantially as described above and reference should be made to that description.

When exposure terminates, the Geneva drive 276 is automatically enabled by the electronic control system 280 to begin stepping of the bearing assembly 268 to the next position where the next image 2 is positioned in the printer gate aperture 33. At the same time, the photographic paper 84 is stepped by a distance corresponding to one print by conventional mechanism (not shown). When the next of the images 2 is in the printer gate aperture 33, the exposure sequence repeats itself as before, the bearing assembly 268 is again rotated, and so on. Automatic sequencing continues until the last of the images 2 on the film disc 4 has been printed.

When the last of the images 2 on the film disc 4 has been printed, the Geneva drive mechanism 276 continues to rotate the picker 240 until it is at the same position at which it was unseated from the arm 222A of the film positioner 216. At this stage the key member 247 is again oriented to mate with the slot 234 formed between the locating fingers 233 on the arm 222A. During the course of printing, the machine element 278 had continued to exert a downward bias on the actuating button 239, thereby urging the picker 240 into positive engagement with the bearing assembly 268. Now, with all the images on the film disc 4 printed, the machine element 278 is conditioned to retract to its former position and release the picker. Due to magnetic attraction between magnetic plate 237 and the lug 248, the picker 240 is raised from its detached position adjacent the assembly 268 to its former position between the locating fingers 233. At this position the picker 240 is again held captive by the positioner 216 and cannot rotate with respect to arm 222 of the positioner.

If the operations occurring at each of the other stations A, B and D are completed, the Geneva rotor 229 again rotates the Geneva wheel 224 through a quarter revolution, carrying the arm 222A and the captured picker 240 to the station D. Unloading or removal of the picker 240 occurs in this position. For example, the picker 240 can be manually removed from between the locating fingers 233. The operator's fingers grasp each of the hooked fingers 241 and, with slight pressure squeeze the upper parts of the fingers 241 together so the tips 246 of the fingers 241 clear the edge of the locating apertures 7. The film unit 1, assisted by the plunger 242, springs downward and drops into the container 267, mating the picker aperture 244 with the stacking spindle 265 of the container.

With unloading completed, and if the operations occurring at each of the other stations A, B and C are complete, the Geneva rotor 229 is again enabled and rotates the Geneva wheel 224 through another quarter revolution. During this movement, the arm 222A swings back into its initially-described station A adjacent the classification axis 249. Thus the cyclical steps of operation are completed with regard to the first film unit carried by the arm 222A and the arm 222A is ready to continue with regard to another film unit.

During the operations described in connection with arm 222A, other of the arms 222B, C and D will have been positioned to stations A, B, C and D. The operator has been picking up other film units with other pickers, each identical to the picker 240. These pickers, with their captured film units, have been serially inserted into the locating members 232 of the other arms 222B, C and D. The operator classifies each of the frames on successive film units, entering data through the keyboard assembly 35 into the electronic memory 281, where it is properly identified and retained for recall until that film unit is ready for printing. Each film unit proceeds through the cleaning station B and the printing station C, finally being removed at the unloading position D. Therefore, each operation with regard to one film unit may be occurring while another operation, with regard to another film unit, is also occurring. In particular, various operations may be occurring at various of the positions while the printer automatically prints the images from one of the film units. Furthermore, the apparatus illustrated by Fig. 11 for rotating the film unit externally of the positioner 216 in the exposure station may be duplicated in any other of the stations for similarly indexing the film unit relative to the positioner at those stations.

In Fig. 12 there is illustrated a third embodiment of the invention which in some respects is similar to the second embodiment illustrated in Fig. 7.

The third embodiment includes a film positioner 316 which is similar to the positioner 216 and includes four mounting arms 322A—D which are disposed in a common plane at right angles to one another. The arms 322A—D are carried by a mounting plate 321. For a full understanding of the arms 322A—D, the mounting plate 321 and the means for stepping the positioner in 90° steps, reference should be made to the description with reference to Figs. 7 and 11.

The third embodiment is illustrated as included in a printer which includes four work stations. Work station 300A is a station at which the positioner receives a film unit 1 from a cylindrical storage container 301 which is capable of containing a hundred film units (as illustrated in phantom).

Work station 300B is an automatic scanning station including a conventional scanning disc and photoreceptor for sequentially scanning all, or a portion, of the negative frame. For a further description of the scanning station reference should be made to the foregoing description in this specification.

Work station 300C is a printing station which is generally similar to printing stations described previously in this specification and for an understanding thereof reference should be made to such foregoing description. In this embodiment the photographic paper 84 is below the negative image and the lamphouse 32 is above the negative image on the film unit 1.

Work station 300D is a station at which the positioner 316 gives up a film unit to a cylindrical storage container 301A which is similar to the container 301.

Mounted on the end portion of each arm 322A—D of the positioner 316 is a film unit carrier 350. The four carriers 350 are identical and a description of one will suffice.

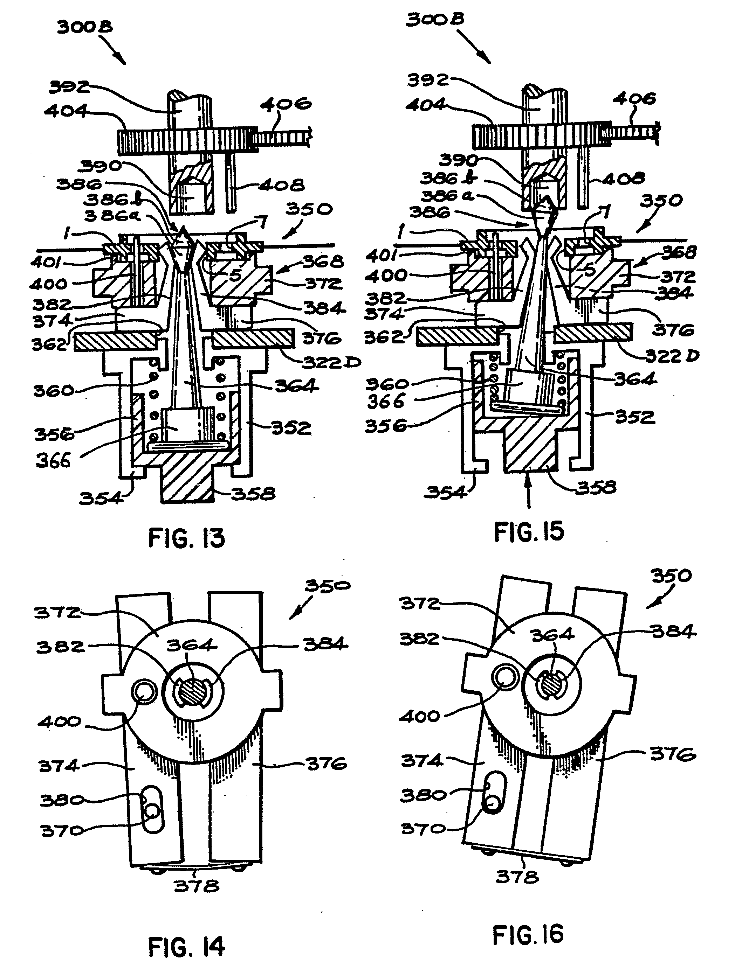

Reference is now made to Figs. 13 to 16 in which a film unit carrier 350 is illustrated. One carrier 350 is provided at the radially outer end portion of each mounting arm 322A—D of the film positioner. The carrier 350 illustrated in Figs. 13 to 16 is shown in Figs. 13 and 15 as being located at a work station, for example 300B or 300C at which the film unit is rotated. For the sake of description it will be assumed that the carrier is at work station 300B and that therefore, in conformity with Fig. 12, it is the mounting arm 322D which supports the carrier.

A film unit 1 is shown on the carrier in Figs. 13 and 15 but is omitted in Figs. 14 and 16. Also omitted in Figs. 14 and 16 is a showing of the mounting arm.

The carrier 350 includes a hollow cylindrical housing 352 fixedly mounted on the underside of the mounting arm 322D. The lower end of the housing 352 has an inwardly directed collar 354. Disposed within the housing 352 is a plunger 356 which has a projection 358 extending to the outside of the housing through the aperture in the collar 354. The plunger 356 is biased downwardly in the housing by a spring 360 and is limited in its downwards movement by the collar 354.

The housing 350 has an opening at its upper end which is aligned with an aperture 362 in the mounting arm 322D.

The plunger 356 is of cup form and seated in the cup is the enlarged lower end portion 366 of a pilot 364 which extends upwardly through the aperture 362 and projects above the arm 322D.

The spring 360 bears on the enlarged end portion 366 of the pilot 364 so that even though the pilot has freedom to rock to such a position as that shown in Fig. 15 it is spring biased to the vertical position illustrated in Fig. 13. The spring 360 biases the plunger 356 downwards through the intermediary of the enlarged end portion 366 of the pilot 364.

An upper portion 368 of the carrier 350 is disposed above the arm 322D. The upper portion 368 has some freedom for translational movement over the arm. The freedom is limited by a post 370 secured to the arm 322D, and by limits on the rocking motion of the pilot 364 which extends upwardly through the upper portion 368.

The upper portion 368 includes a rigid annular member 372 seated on two beams 374, 376. The beams 374, 376 are connected at one end by a leaf spring 378 which biases the remote ends of the beams 374, 376 towards one another. One beam, 374, has a slot 380 through which extends the post 370.

Each beam 374, 376 has upstanding from it a finger 382, 384, respectively. The fingers 382, 384, being integral with the beams 374, 376, are biased towards one another by the spring 378.

The upper end portion 386 of the pilot 364 is of double cone shape, as may be seen in Figs. 13 and 15. The cone shape portion 386a serves to hold the fingers 382, 384 spaced farther apart when it is between the upper ends of the fingers, than when the pilot is in the raised condition of Fig. 15 when a smaller diameter portion of the pilot is between the fingers.

The other cone shape portion 386b which is at the end of the pilot 364, serves to center the upper end portion 386 of the pilot in a bore 390 in the end of a vertical spindle 392. Such centering occurs when the plunger 356 is raised when the pilot and spindle are not axially aligned.

The annular member 372 is raisable from its position illustrated in Figs. 13 and 15 by means not shown.

A pin 400 extends vertically upwards from the beam 374 through a bore in the annular member 372 and projects above the upper surface of the annular member.

The upper surface of the annular member 372 has a coaxial upwardly extending annular rib 401 for cradling a film unit 1 lying on the upper surface of the annular member. The pin 400 serves to retain the film unit in fixed and known angular orientation on the annular member by extending through one of locating apertures 7 in the film unit.

A gear wheel 404 is journalled on the spindle 392 and is driven in rotation by means (not shown) including a further gear wheel 406. The gear wheel 404 carries a vertical downwardly extending pin 408 which is engageable with one of the locating apertures 7 in a film unit when a film unit is raised towards a spindle.

A spindle, similar to spindle 392 is provided in each storage container 301. Such spindle has a bore in its lower end. The lower end of the inside surface of the container carries an inwardly directed rib which serves to prevent film units sliding downwardly off the spindle and out of the container.

Let it be assumed that the carrier 350 has picked up a film unit, in a manner which will be described. The annular member 372 is in its lowered position so that the upper ends of the fingers extend into the aperture 5 in the film unit. Also because the pilot 364 is lowered, the upper ends of the fingers 382, 384 are biased apart so that they grip the film unit and hold it onto the annular member.

The arm 322D is rotated to a work station. In such position at the work station the pilot 364 is nominally axially aligned with the spindle 392. However, because of tolerances and inaccuracies the circumferential displacement apparent in Fig. 15 exists. The plunger 356 is raised by engagement of a solenoid or a cam (not shown) with the projection 358. As the plunger is pushed upwards it carries the pilot 364 vertically upwards with it until the point of the pilot enters the bore 390 in the spindle 392. Continued upwards movement of the pilot 364 causes the upper end portion 386 thereof to move laterally and into the bore 390. Such lateral movement of the upper end portion of the pilot causes a similar lateral movement of the annular member 372 and fingers 382, 384 and adjacent portions of the beams 374, 376. In this way the spindle aperture 5 in the film unit becomes aligned with the spindle 392.

Upwards movement of the pilot 364 allows the fingers 382, 384 to approach one another under the influence of the spring 378 so that the grip by the fingers on the film unit is released.

The annular member 372 is now raised so that the film unit passes onto the lower end of the spindle 392 and so that the pin 408 enters its locating aperture 7 as the other locating aperture 7 moves off the pin 400.

The film unit is now free to be rotated by the drive train including gear wheels 406, 404 and the pin 408. After being rotated through 360° (or a multiple thereof) at the scanning station 300B (or at the printing station 300C) during which rotation operations upon the film unit are completed, the annular member 372 is lowered. The film unit descends with the annular member passing off the spindle 392 and passing from the orientational control of the pin 408 to that of the pin 400.

After the annular member 372 has been fully lowered, the plunger 356 also is lowered. Lowering of the plunger 356 frees the upper end of the pilot from the spindle and moves the fingers 382, 384 apart so that the film unit is again clamped.

The positioner is stepped through 90° so that the operation is repeated at the next station.

It will be realized that the pin 370 and slot 380 arrangement allows the upper portion 368 of the carrier 350 freedom for universal translational movement within a certain boundary.

When the carrier arrives at the storage container 301A the pilot 364 is raised to engage the spindle in the container. The annular member is then raised. This pushes the film unit up into the container so that it passes over the aforementioned rib which holds the film unit up in the container as and when the annular member is lowered. The now empty carrier passes on to the station 300A and receives a film unit from the container 301. The stack of film units is driven downwards at the appropriate times so that the lowermost film unit is pushed down past the rib out of the container onto the carrier.

In the arrangement shown in Figs. 13 to 16 the fingers 382, 384 are engageable with a cylindrical surface of the spindle aperture 5 in the hub 3. With such an arrangement the position of the pilot 364 in its condition illustrated in Fig. 13 is dependent on the diameter of the aperture 5. In another arrangement the fingers could be provided with oppositely directed lips at their upper ends which would overlie the upper face of a hub (in the Fig. 13, gripping condition) and would not grip the cylindrical surface of the aperture. This would render the position of the pilot in the vertical direction relatively independent of the diameter of the aperture when in the Fig. 13 gripping, condition.

The cylindrical storage container may have forms other than that described above. For example, instead of, or in addition to, the film units being held in the container by the rib adjacent the mouth of the container, the wall of the container may be so formed internally that throughout the length of the storage space and around the entire, or a portion of the, periphery of each film unit, the periphery of the film unit is gripped. This gripping may be achieved by forming the wall of the container with an effective radius less than the radius of the film units.

It may be desirable to positively drive the film units towards the mouth of the container. In this case an arm may extend into the container from a drive screw which is parallel to the spindle carrying the film units. The arm acts on the body of film units through a dummy film unit. A ball detent may be provided on the spindle adjacent the mouth of the container to prevent the film units being driven out of the container unintentionally.

The film units may be loaded into the container by first threading them onto the spindle and then, when the spindle is full, inserting the loaded spindle into the container.

It may be convenient to use a double container in which there are two parallel stacks of film units in side-by-side relationship. Each of such stacks would be on its own spindle. In this case the means for positively driving the units in each stack towards the mouth of the container might include a closed loop chain trained about two chain wheels, one of which is driven. The chain has a drive pin extending from it. The container has a slot extending parallel to the spindles. The slot is adapted to receive the chain and chain wheels.

Two yokes are mounted for sliding movement on two guides, one associated with each stack. The chain may be driven so that the drive pin engages selectively one or the other of the yokes and moves the driven yoke so as to move film units in the chosen stack towards the mouth of the container. After one stack has been emptied the drive pin is engaged with the yoke associated with the other stack.

In an arrangement in which the container includes two stacks, two work stations would be dedicated to the supply container and two further work stations would be dedicated to the take-up container. Of course, one of each of the two sets of two stations would in effect be idle whilst the other is supplying, or taking up, as the case may be, film units. A control computer controls which two of the four stations are active. The two spindles in each container would be on the same spacing as the arms of the positioner.

## Claims

1. Apparatus for positioning a photographic image (2) at a required position at a work station (A, B, C, D; 300A, 300B, 300C, 300D), the image being one of a plurality of images carried in an annular region of a disc-shaped film unit (1), said apparatus including rotary means (392, 404, 406) for rotating the film unit at the work station to bring the images in succession to the required position, characterized in that the said work station is one of a plurality of work stations, and that said apparatus includes a positioner (216, 316) mounted for rotary motion and having a plurality of film unit carriers (236, 240; 350), each of the carriers being adapted to carry a single film unit and being fixedly located relative to one another and movable in unison, and drive means (225, 229, 223) for rotating the positioner to move the carriers (236, 240; 350) through arcuate steps to move the film units carried thereby to the workstations in sequence.

2. Apparatus according to claim 1, characterized in that each carrier (350) is adapted to release a film unit (1) carried by it at the said work station unto the influence of the rotary means (392, 404, 406) and subsequently to retrieve the film unit from the influence of the rotary means.

3. Apparatus according to claim 2, characterized in that each carrier (350) includes means (400) for retaining a carried film unit with the images (2) in predetermined orientation about an axis coincident with the geometric axis of the annular region.

4. Apparatus according to claim 2 or 3, characterized in that each carrier (350) is provided with freedom for limited translational movement relative to the remainder of the moving means whereby inaccuracy of positioning of the film unit (1) at a station may be overcome.

5. Apparatus according to claim 4, characterized in that said work station includes a spindle (392) for extending through a central aperture (5) in the film unit (1) to support the film unit in rotation, the spindle having an axial bore (390) in an end, and that each carrier includes a pilot (364) having a tapered end, the pilot being axially movable so that the tapered end enters the bore of the spindle when the carrier is at the station, the pilot being mounted for rocking movement whereby the tapered end may move laterally to enter the bore.

6. Apparatus according to claim 3, characterized in that each carrier (350) includes an annular member (372) disposed about the pilot (364), and two fingers (382, 384) extending through the annular member at opposite sides of the pilot, the fingers being spring-biased (378) towards one another and movable apart by the pilot upon movement of the pilot away from the spindle, the fingers when in their moved apart condition serving to grip a film unit around its central aperture (5), the annular member being movable to transfer a film unit to the spindle (392) under the guidance of the pilot.

7. Apparatus according to any one of the preceding claims included in a photographic printer, characterized in that one of said stations is a printing station and includes a printing gate, and that another of said stations is a classification station at which an image to be printed is classified.

## Revendications

1. Appareil pour mettre en place une image photographique (2) dans une position requise à un poste de travail (A, B, C, D; 300A, 300B, 300C, 300D), où l'image est l'une d'une série d'images portées par une zone annulaire d'un ensemble de film en forme de disque (1), cet appareil qui comprend des moyens de rotation (392, 404, 406) pour faire tourner l'ensemble au poste de travail afin de placer les images les unes à la suite des autres dans la position requise, étant caractérisé en ce que ce poste de travail est l'un de plusieurs postes de travail, et en ce que cet appareil comprend un positionneur (216, 316) monté de manière à pouvoir tourner et ayant des porteurs d'ensemble (236, 240; 350) qui sont chacun conçus pour transporter un seul ensemble et occuper une position fixe relativement les uns aux autres et se déplacer à l'unisson, et des moyens d'entraînement (225, 229, 223) pour faire tourner le positionneur afin de mouvoir les porteurs (236, 240; 350) suivant des pas courbes pour déplacer en séquence les ensembles qu'ils portent aux postes de travail.

2. Appareil conforme à la revendication 1, caractérisé en ce que chaque porteur (350) est conçu pour libérer un ensemble (1) qu'il porte au dit poste de travail sous l'influence des moyens de rotation (392, 404, 406) et ultérieurement soustraire l'ensemble de l'influence des moyens de rotation.

3. Appareil conforme à la revendication 2, caractérisé en ce que chaque porteur (350) comprend des moyens (400) pour retenir un ensemble porté avec les images (2) dans une orientation prédéterminée par rapport à une axe coincidant avec l'axe géométrique de la zone annulaire.

4. Appareil conforme à la revendication 2 ou 3, caractérisé en ce que chaque porteur (350) dispose de liberté pour une translation limitée relativement au reste des moyens de déplacement de manière à remédier à l'imprécision de mise en place de l'ensemble (1) à un poste.

5. Appareil conforme à la revendication 4, caractérisé en ce que le dit poste de travail comprend une broche (392) qui est destinée à traverser un orifice central (5) dans l'ensemble (1) pour le supporter en rotation et qui présente un alésage axial (390) à une extrémité et en ce que chaque porteur comprend un pilote (364) qui présente une extrémité biseautée, qui est mobile axialement de manière que l'extrémité biseautée s'engage dans l'alésage de la broche lorsque le porteur est au poste, et qui est monté de manière à pourvoir basculé afin que l'extrémité biseautée puisse se déplacer latéralement pour pénétrer dans l'alésage.

6. Appareil conforme à la revendication 5, caractérisé en ce que chaque porteur (350) comprend un collier (372) disposé autour du pilote (364), et deux doigts (382, 384) qui traversent le collier suivant des côtés opposés du pilote et qui sont sollicités élastiquement (378) l'un vers l'autre et peuvent se séparer sous l'action du pilote lorsque ce dernier s'éloigne de la broche, ces doigts lorsqu'ils sont écartés servant à agripper un ensemble à l'entour de son orifice central (5), le collier annulaire étant mobile pour transférer un ensemble à la broche (392) sous le guidage du pilote.

7. Appareil conforme à l'une quelconque des revendications qui précèdent associé à une tireuse photographique, caractérisé en ce que l'un de ces postes est un poste de tirage et comprend une fenêtre de tirage et en ce qu'un autre de ces postes est un poste de tri où les images à tirer sont analysées.

## Patentansprüche

1. Vorrichtung, mittels derer jeweils ein photographisches Bild (2) aus einer Vielzahl von Bildern, die auf einem ringförmigen Bereich einer scheibenförmigen Filmeinheit (1) angeordnet sind, in einer gewünschten Stellung in einer Bearbeitungsstation (A, B, C, D; 300A, 300B, 300C, 300D) positionierbar ist, wobei die Vorrichtung sich drehende Mittel (392, 404, 406) aufweist, mit denen die Filmeinheit in der Bearbeitungsstation so drehbar ist, daß die Bilder nacheinander in die gewünschte Stellung gelangen, dadurch gekennzeichnet, daß die Bearbeitungsstation eine von mehreren Bearbeitungsstationen ist und daß die Vorrichtung eine drehbar gelagerte Positioniereinrichtung (216, 316) enthält, die eine Vielzahl von Trägern (236, 240; 350) für Filmeinheiten aufweist, von denen jeder jeweils eine Filmeinheit aufnehmen kann, wobei die Träger fest zueinander angeordnet und gemeinsam bewegbar sind, und daß Antriebsmittel (225, 229, 223) vorgesehen sind, mit denen die Positioniereinrichtung so drehbar ist, daß die Träger (236, 240; 350) jeweils um einen Kreisbogenabschnitt weiterbewegt werden, wodurch die auf ihnen befindlichen Filmeinheiten nacheinander zu den Bearbeitungsstationen gelangen.

2. Vorrichtung nach Anspruch 1, dadurch gekennzeichnet, daß jeder der Träger (350) eine auf ihm befindliche Filmeinheit (1) in der Bearbeitungsstation jeweils dem Einfluß der sich drehenden Mittel (392, 404, 406) aussetzt und anschließend dem Einfluß der sich drehenden Mittel wieder entzieht.

3. Vorrichtung nach Anspruch 2, dadurch gekennzeichnet, daß jeder Träger (350) Mittel (400) aufweist, die eine auf dem Träger befindliche Filmeinheit so festhalten, daß die Bilder (2) in einer vorbestimmten Stellung um eine Achse angeordnet sind, die mit der geometrischen Achse des ringförmigen Bereichs zusammenfällt.

4. Vorrichtung nach Anspruch 2 oder 3, dadurch gekennzeichnet, daß jeder Träger (350) gegenüber den übrigen beweglichen Mitteln die Freiheit zur Ausführung einer begrenzten translatorischen Bewegung besitzt, durch die Ungenauigkeiten bei der Positionierung der Filmeinheit (1) in einer Bearbeitungsstation ausgeglichen werden können.

5. Vorrichtung nach Anspruch 4, dadurch gekennzeichnet, daß die Bearbeitungsstation eine Spindel (392) aufweist, die sich durch eine Mittelöffnung (5) in der Filmeinheit (1) hindurch erstreckt und auf der die Filmeinheit bei ihrer Drehung gelagert ist, wobei die Spindel in ihrem einen Ende eine axiale Bohrung (390) besitzt, und daß jeder Träger mit einem Zapfen (364) mit spitz zulaufendem Ende versehen ist, der axial so beweglich ist, daß das spitz zulaufende Ende in die Bohrung der Spindel eingreift, wenn sich der Träger in der Bearbeitungsstation befindet, wobei der Zapfen so gelagert ist, daß er eine hin- und hergehende Bewegung ausführt, derart, daß das spitz zulaufende Ende sich seitlich bewegend in die Bohrung eingreifen kann.

6. Vorrichtung nach Anspruch 5, dadurch gekennzeichnet, daß jeder Träger (350) ein um den Zapfen (364) herum angeordnetes ringförmiges Element (372) aufweist und zwei Finger (382, 384) auf einander gegenüberliegenden Seiten des Zapfens durch das ringförmige Element hindurchragen, wobei die Finger durch einer Feder (378) gegeneinander vorgespannt und durch den Zapfen auseinanderbewegbar sind, wenn dieser mit der Spindel außer Eingriff kommt und die Finger in ihrer auseinanderliegenden Stellung jeweils an der Mittelöffnung (5) eine Filmeinheit angreifen und wobei das ringförmige Element so beweglich ist, daß es unter der Führung des Zapfens eine Filmeinheit zu der Spindel (392) bringt.

7. Vorrichtung nach einem der vorhergehenden Ansprüche, die in einem photographischen Printer enthalten ist, dadurch gekennzeichnet, daß eine der Bearbeitungsstationen eine Printstation mit einer Bildbühne ist und eine andere der Behandlungsstationen der Klassifizierung der Bilder dient, von denen Prints hergestellt werden sollen.

0 016 199

FIG. 1

FIG. 3

FIG. 4

FIG. 2

FIG. 5

FIG. 6

FIG. 7

0 016 199

FIG. 8

FIG. 9

FIG. 10

FIG. 11

5

FIG. 12

FIG. 13

FIG. 15

FIG. 14

FIG. 16